# EUROPÄISCHE PATENTSCHRIFT

(11) **EP 1 704 376 B1**
(45) Veröffentlichungstag und Bekanntmachung des Hinweises auf die Patenterteilung: **15.07.2009**
(21) Anmeldenummer: 04820827.6
(22) Anmeldetag: 16.12.2004
(51) Int. Cl.: F28C 3/00

(54) **SCHÜTTGUTROSTKÜHLER AUFWEISEND EINE REGELUNGSVORRICHTUNG FÜR DIE KÜHLLUFTZUSTRÖMUNGEN**
BULK MATERIAL GRATE COOLER COMPRISING A REGULATING DEVICE FOR THE COOLING AIR FLOW
REFROIDISSEUR À GRILLE DE MATIÈRES EN VRAC COMPRENANT UN DISPOSITIF DE REGULATION DESTINE A REGULER LES AFFLUX D'AIR DE REFROIDISSEMENT

(30) Priorität: 19.12.2003 DE 10359801; 23.10.2004 DE 102004051699
(43) Veröffentlichungstag der Anmeldung: 27.09.2006
(73) Patentinhaber: KHD Humboldt Wedag GmbH, 51067 Köln (DE)
(72) Erfinder: MERSMANN, Matthias, 4731 Lichtenbusch (BE); SCHINKE, Karl, 50937 Köln (DE); BINNINGER, Thomas, Alpharetta, GA 30022 (US); EDEL, Wilhelm, 53773 Hennef (DE); WERKER, Ralf, 51109 Köln (DE)
(86) Internationale Anmeldenummer: PCT/EP2004/014358
(87) Internationale Veröffentlichungsnummer: WO 2005/064256

(56) Entgegenhaltungen:
- WO-A-02/06748
- US-A- 3 037 528
- US-A- 3 540 484
- US-A- 3 955 595

## Beschreibung

Die Erfindung betrifft einen Schüttgutrostkühler, aufweisend eine Vorrichtung zur Regelung des Strömungsquerschnittes in den Kühlluftzuströmungen des Schüttgutrostkühlers zur Kühlung eines heißen Schüttgutes wie z. B. Zementklinker, mit einem in die Kühlluftzuströmung unterhalb des Kühlrostes integrierten Reglergehäuse, in welchem sich ein Stellorgan derart bewegt, dass eine Erhöhung der Strömungsgeschwindigkeit im Bereich des Stellorgans und damit verbunden ein beginnender Anstieg der Kühlluftdurchflussmenge eine Verkleinerung des freien Strömungsquerschnittes bewirkt und umgekehrt.

Bei einer Zementklinkerproduktionslinie wird der in einem Drehrohrofen aus calciniertem Zementrohmehl erbrannte heiße Zementklinker aus dem Ofenaustragsende auf einen Kühler, in der Regel auf den Kühlrost eines Rostkühlers abgeworfen, auf diesem verteilt und durch geeignete Fördermittel in Längsrichtung zum Kühleraustragsende bewegt, wobei der Kühlrost und die heiße Schüttgutschicht im wesentlichen von unten nach oben von Kühlluftströmungen durchsetzt werden. Nachfolgend werden die bekannten Rostkühlertypen kurz erläutert.

Bei einem Schubrostkühler wechseln sich in Förderrichtung gesehen ortsfeste Rostplattenreihen mit hin- und herbeweglichen Rostplattenreihen ab, alle Rostplatten sind mit Kühlluftöffnungen versehen und sie werden im wesentlichen von unten nach oben von Kühlluft durchströmt, und durch die gemeinsam oszillierende Bewegung aller beweglichen Rostplattenreihen wird das zu kühlende heiße Gut schubweise transportiert und dabei gekühlt. Als eine Alternative zu einem solchen Schubrostkühler ist z. B. aus der EP-B-1 021 692 ein Rostkühlertyp bekannt, bei dem der von Kühlluft durchströmte Kühlrost nicht bewegt wird, sondern feststeht, wobei oberhalb der feststehenden Rostfläche mehrere Reihen benachbarter hin- und herbeweglicher balkenförmiger Schubelemente angeordnet sind, die zwischen einer Vorhubposition in Kühlguttransportrichtung und einer Rückhubposition bewegt werden, so dass durch die Hin- und Herbewegung dieser Schubelemente im abzukühlenden Gutbett das Gutmaterial ebenfalls vom Kühleranfang zum Kühlerende sukzessive bewegt und dabei gekühlt wird.

Bei derartigen Rostkühlern lassen sich Ungleichverteilungen im heißen Schüttgutbett hinsichtlich Schüttgutbetthöhe, Klinkerkorngröße, Temperaturprofil etc. nicht immer vermeiden, was eine ungleichmäßige Kühlung zur Folge hat. Denn in Kühlrostbereichen mit größerer Schüttgutbetthöhe steigt der Strömungswiderstand für die Kühlluft, es sinkt die Strömungsgeschwindigkeit und es wird weniger Kühlluft durch das Schüttgutbett geleitet, und umgekehrt fällt in Kühlrostbereichen mit niedriger Schüttgutbetthöhe der Strömungswiderstand für die Kühlluft, deren Strömungsgeschwindigkeit und die Gefahr eines Luftdurchbruchs nehmen zu, und es wird eine zu hohe Kühlluftmenge gerade durch solche Schüttgutbettbereiche geleitet, welche die geringste Kühlluftmenge benötigen würden.

Es ist daher bei einem Rostkühler zur Kühlung von heißem Schüttgut wie Zementklinker bekannt (EP-B-0 848 646), in den Kühlluftzuströmungen unterhalb des Kühlrostes die jeweilige Kühlluftmenge selbsttätig jeweils so zu regeln, dass bei beginnendem Anstieg der Kühlluftdurchflussmenge, hervorgerufen durch geringer werdende Kühlgutbetthöhe und abnehmendem Strömungswiderstand, die lichte Querschnittsfläche der jeweiligen Kühlluftzuströmungsleitungen reduziert wird und umgekehrt, um auf diese Weise einen wechselnden Druckabfall über das Kühlgutbett auszugleichen, so dass die jeweilige Kühlluftmenge nicht mehr abhängig ist vom jeweiligen Druckverlust bzw. Strömungswiderstand der Kühlluft in der jeweiligen Kühlgutbettzone. Dabei arbeitet der bekannte mechanische Kühlluft-Durchflussmengenstromregler mit einer gewichtsbelasteten Pendelklappe mit horizontal liegender Schwenkachse, wobei die Pendelklappe je nach den vorherrschenden Druckbedingungen und Strömungsverhältnissen die jeweilige Kühlluftzuströmung mehr oder weniger stark selbsttätig drosselt. Würde man die bekannte KühlluftRegelungsvorrichtung, die mit einem rein durch Schwerkraft betätigten Schwenkhebelgewicht mit Anströmkörper selbsttätig arbeitet, unterhalb des Kühlrostes in den Kühlluftzuströmungen von Kühlrostzonen anordnen, die nicht feststehen, sondern die wie bei einem Schubrostkühler zwecks Schüttguttransports samt Regelungsvorrichtungen hin- und herbewegt werden, so würde die selbsttätige Regelung der Regelungsvorrichtung durch die hin- und hergehende Schüttelbewegung gestört und das Regelungsergebnis dadurch verfälscht werden.

Auch aus der WO- 02/06748 ist bei einem Schüttgutrostkühler eine Kühlluftregelungsvorrichtung bekannt, bei der in der Kühlluftzuführungsleitung unterhalb des Rostes eine runde mit Durchgangsöffnungen versehene feststehende Segmentscheibe und oberhalb derselben eine drehbeweglich an einer Achse gehalterte Flügelscheibe angeordnet sind, welch letztere sich in Abhängigkeit der Strömungsgeschwindigkeit der Kühlluft verdreht und dabei den lichten Strömungsquerschnitt der Segmentscheibe in der Weise selbsttätig verändert, dass bei einer Erhöhung der Strömungsgeschwindigkeit die Flügelscheibe entgegen einer Federkraft verdreht und der Strömungsquerschnitt verkleinert wird, und umgekehrt. Auch bei dieser selbsttätig arbeitenden Kühlluftregelungsvorrichtung ist die Gefahr nicht ausgeschlossen, dass die Funktion der Regelungsvorrichtung durch die stoßweise Pendelbewegung der hin- und herbeweglichen Kühlrostzonen gestört wird.

Schließlich wird in der US-Patentschrift US 3,540,484 A ein zylindrischer Konstantvolumenregler zum Einsatz in Luftverteilern von Klimaanlagen offenbart. Dieser Konstantluftmengenregler weist Luftdurchtrittsöffnungen im zylindrischen Mantel auf.

Der Erfindung liegt die Aufgabe zugrunde, einen Schüttgutrostkühler, aufweisend eine selbsttätig arbeitende Kühlluftregelungsvorrichtung gemäß Oberbegriff des Anspruchs 1 so auszubilden, dass die Kühlluftregelungsvorrichtung einfach gebaut und problemlos sowohl für nicht bewegte als auch insbesondere für bewegte Kühlrostbereiche bzw. bewegte Kühlrostsysteme eines Rostkühlers zur Kühlung insbesondere von heißem Zementklinker eingesetzt werden kann.

Diese Aufgabe wird gemäß der Erfindung mit einem Schüttgutrostkühler, aufweisend eine Regelungsvorrichtung mit den Merkmalen des Anspruchs 1 gelöst. Vorteilhafte Weiterbildungen der Erfindung sind in den Unteransprüchen angegeben.

Die in den Kühlluftzuströmungen unterhalb des Kühlrostes eines Schüttgutkühlers angeordneten Regelungsvorrichtungen weisen jeweils ein von der zugeführten Kühlluft durchströmtes Reglergehäuse sowie ein darin bewegbares Stellorgan auf. Charakteristisch für einen erfindungsgemäßen Schüttgutrostkühler ist, dass in dem von Kühlluft im wesentlichen von unten nach oben durchströmten hohlkörperartigen Reglergehäuse als Stellorgan ein von der Kühlluftströmung translatorisch bewegbarer Innenkörper verschieblich geführt und von der Kühlluftströmung selbsttätig bewegbar ist. Der quer zur Hauptströmungsrichtung der Kühlluftströmung liegende Innenkörper kann z. B. an einer zentralen Achse innerhalb des Reglergehäuses geführt sein. Eine Verschiebung des Innenkörpers bewirkt die Änderung des für die Kühlluftströmung verbleibenden freien Strömungsquerschnittes in der Weise, dass eine Erhöhung der Strömungsgeschwindigkeit der Kühlluft im Bereich des Innenkörpers und damit verbunden ein beginnender Anstieg der Kühlluftdurchflussmenge eine Verkleinerung des

Durchströmungsquerschnittes des Reglergehäuses bewirkt, und umgekehrt. Die translatorische Verschiebung des Innenkörpers im Reglergehäuse geschieht entgegen der Einwirkung einer Rückstellkraft. Dazu kann am Zentrum des Innenkörpers mit Vorteil wenigstens eine Rückstellfeder angreifen, die von der Achse des Reglergehäuses gehalten sein kann und die bei Ausbleiben der Kühlluftströmung den Durchströmungsquerschnitt des Reglergehäuses offen hält.

Im Betrieb der selbsttätig arbeitenden KühlluftRegelungsvorrichtung des erfindungsgemäßen Schüttgutrostkühlers spielen Schwerkraft und Massenträgheitsmomente, welche die Funktion der selbsttätigen Regelung beeinträchtigen könnten, keine Rolle. Die erfindungsgemäße Kühlluft-Regelungsvorrichtung ist daher besonders geeignet zum Einsatz bei Schüttgutkühlern mit bewegten Kühlrostbereichen bzw. bewegten Kühlrostsystemen, d. h. also für die eingangs genannten Schubrostkühler sowie auch für Kühlrostsysteme, die nach dem sogenannten Walking Floor-Förderprinzip arbeiten, was weiter unten noch näher erläutert wird.

Mit besonderem Vorteil kann durch Änderung der Vorspannkraft der wenigstens einen Rückstellfeder die Regelkennlinie der Regelvorrichtung einstellbar und veränderbar sein, und zwar z. B. derart, dass die Rückstellfeder eine um die Reglergehäuse-Achse herum angeordnete Schraubenlinienfeder ist, deren von der Stellorgan-Scheibe abgewandtes Ende sich an einem Stellorgan abstützt, das auf das mit Gewinde versehene Ende der Achse zwecks Einstellung/Änderung der Federvorspannkraft verstellbar geschraubt ist. Auf diese Weise können die Regelkennlinie sowie auch der Sollwert des Ansprechens der erfindungsgemäßen Regelungsvorrichtung einfach eingestellt und geändert werden.

Die Regelkennlinie kann das Ansteigen des Kühlluftbedarfs mit ansteigender Kühlgutbetthöhe bzw. ansteigendem Kühlgutbett-Durchströmungswiderstand für die Kühlluft wiedergeben. Sie kann zur Regelung eines im wesentlichen konstant bleibenden Volumenstroms der Kühlluft unabhängig von Änderungen des Kühlluftströmungswiderstandes herangezogen werden.

Der innerhalb des Reglergehäuses als Stellorgan wirkende Innenkörper kann die Gestalt z. B. einer Scheibe, eines topfartigen Rohrabschnitts etc. haben. Die am Stellorgan angreifende Rückstellfeder kann statt einer Schraubenlinienfeder auch ein anderes Federelement sein, das eine bestimmte Vorspannkraft aufweist. Es wäre auch möglich, auf eine Rückstellfeder ganz zu verzichten und das Gewicht des Innenkörpers so einzustellen, dass nur die Gewichtskraft als Rückstellkraft für den Innenkörper wirkt.

Statt an einer z. B. zentralen Achse kann der Innenkörper auch an seinem Umfangsrand im Reglergehäuse translatorisch bewegbar geführt sein, so dass in diesem Falle eine Führungsachse entfallen kann.

Die selbsttätige Regulierung des Volumenstroms der durch den Kühlrost strömenden Kühlluft kann nach einem Ausführungsbeispiel der Erfindung durch eine Regelvorrichtung mit z. B. zylindrischem Reglergehäuse erreicht werden, das eine Vielzahl von über die Länge bzw. Höhe und um den Umfang verteilte Öffnungen aufweist, wobei die Kühlluft durch diese Öffnungen hindurch in das Innere des Reglergehäuses einströmt und an dessen Oberseite, die an die Unterseite des Kühlrostes angeflanscht ist, in den Kühlrost ausströmt. Sollte der Druckverlust der ausströmenden Kühlluft im Schüttgutbett abfallen, würde mehr Kühlluft durch den Rostkühler strömen wollen. Steigt aber die Strömungsgeschwindigkeit der Kühlluft, so bewegt sich der axial geführte Innenkörper, der seinerseits Kühlluft-Durchströmungsöffnungen aufweisen kann, um einen gewissen Betrag von unten nach oben, wobei die Anzahl der im Reglergehäuse oberhalb des Innenkörpers verbleibenden kühlluftdurchströmten Öffnungen und damit die Menge der auf diesem Wege in das Reglergehäuse einströmenden Kühlluft reduziert wird. Gleichzeitig kann die durch die Öffnungen des scheibenförmigen Teils des Innenkörpers strömende Kühlluftmenge ansteigen, so dass insgesamt im wesentlichen eine selbsttätige Konstantregelung der Volumenstrommenge der Kühlluft erreicht wird.

Das Reglergehäuse kann statt der Vielzahl der über die Höhe und den Umfang verteilten Kühlluft-Durchtrittsöffnungen auch nur wenigstens eine einzige z. B. spiralförmig von unten nach oben verlaufende Öffnung aufweisen, so dass auch hierbei mit Verschiebung des Innenkörpers nach oben der Kühlluft-Volumenstrom reduziert wird, und umgekehrt.

Die selbsttätige Regulierung des Volumenstroms der Kühlluft durch den Rostkühler kann nach einem weiteren Ausführungsbeispiel der Erfindung auch mit einem z. B. runden Reglergehäuse erreicht werden, das eine in Strömungsrichtung verlaufende konische Querschnittsverengung aufweist, wobei im Bereich des Gehäusekonusses der von der Kühlluftströmung von unten angeströmte Innenkörper angeordnet ist, so dass eine von der Kühlluftströmung bewirkte axiale Verschiebung des Innenkörpers die Änderung des freien Strömungsquerschnittes zwischen dem Innenkörperrand und dem Gehäusekonus und damit verbunden eine selbsttätige Regulierung des Kühlluft-Volumenstroms bewirkt.

Die Erfindung und deren weitere Merkmale und Vorteile werden anhand der in den Figuren schematisch dargestellten Ausführungsbeispiele näher erläutert.

Es zeigt:
- Fig. 1:: in perspektivischer Ansicht ein erstes Ausführungsbeispiel der Kühlluft-Regelungsvorrichtung des erfindungsgemäßen Schüttgutrostkühlers bei der zwecks Einblick in das Innere ein vorderes Teilstück des Reglergehäuses herausgeschnitten ist,
- Fig. 2:: ebenfalls in perspektivischer Ansicht ein zweites Ausführungsbeispiel der Kühlluft-Regelungsvorrichtung des erfindungsgemäßen Schüttgutrostkühlers, bei der wiederum zwecks Einblick in das Innere ein vorderes Teilstück des Reglergehäuses herausgeschnitten ist, und
- Fig. 3:: ebenfalls in perspektivischer Ansicht ein Kühlrost-Modul eines Schüttgutkühlers mit an der Kühlrostunterseite angebauten Kühlluft-Regelungsvorrichtungen der vorgenannten Figuren, wobei aus einer Vielzahl solcher hintereinander und nebeneinander angeordneten Module der Kühlrost eines Schüttgutkühlers zusammengesetzt ist.

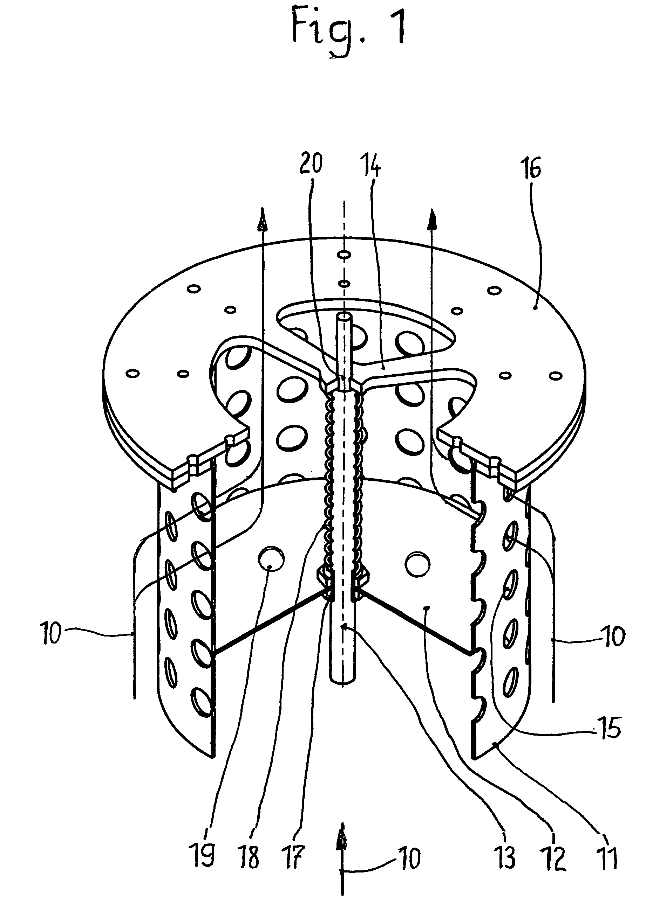

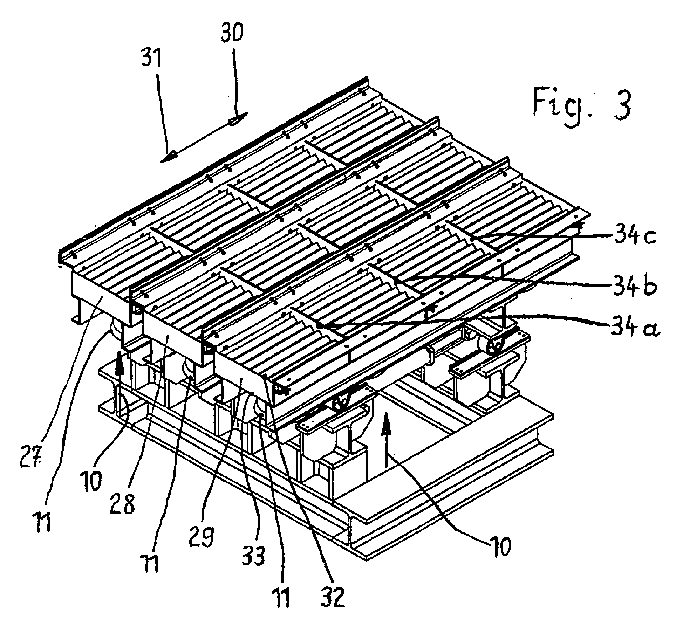

Die von der Kühlluft 10 eines Rostkühlers zum Kühlen von heißem Schüttgut wie z. B. Zementklinker durchströmte selbsttätig arbeitende Regelungsvorrichtung der Fig. 1, wobei eine Vielzahl solcher Regelungsvorrichtungen an die Unterseite des in Fig. 3 ausschnittsweise dargestellten Kühlrostes angebaut ist, weist ein Reglergehäuse 11 und einen darin angeordneten Innenkörper 12 auf. Gehäuse 11 und Innenkörper 12 sind rund ausgebildet; sie können aber auch eine vieleckige Konfiguration haben. Der scheibenförmige Innenkörper 12 ist z. B. an einer zentralen Achse 13, die wenigstens an der Oberseite von Streben 14 im Gehäuse 11 gehalten wird, in Hauptströmungsrichtung der Kühlluft 10 selbsttätig translatorisch bewegbar geführt angeordnet, wobei eine Änderung des Druckverlustes in der Kühlluftströmung oberhalb des Innenkörpers bzw. eine Änderung der Druckdifferenz zwischen Unterseite und Oberseite des Innenkörpers 12 eine axiale Verschiebung des Innenkörpers 12 bewirkt.

Das Reglergehäuse 11 der Fig. 1 weist z. B. eine Vielzahl von über die Länge bzw. Höhe und um den Umfang des Gehäuses verteilte Öffnungen 15 auf, wobei Kühlluft 10 durch diese Öffnungen 15 hindurch in das Innere des Gehäuses 11 einströmt und an dessen Oberseite 16, die an die Unterseite des Kühlrostes angeflanscht ist, über entsprechende Austrittsöffnungen an der Oberseite 16 in den Kühlrost ausströmt. Bei beginnendem Abfall des Druckverlustes der Kühlluft z. B. anlässlich eines beginnenden Luftdurchbruchs in einem Rostkühlerbereich mit niedriger Schüttgutbetthöhe wird der Innenkörper 12 von der Kühlluftströmung selbsttätig nach oben geschoben, und die Anzahl der kühlluftdurchströmten Öffnungen 15 im Gehäuse 11 wird reduziert, womit die Kühlluftmenge selbsttätig gedrosselt bzw. im wesentlichen konstant gehalten werden kann. Das Zentrum des Innenkörpers 12 weist eine Buchse 17 auf, mit der der Innenkörper längs der Achse 13 des Reglergehäuse geführt ist. Am Zentrum des Innenkörpers 12 greift im Bereich seiner Buchse 17 wenigstens eine Rückstellfeder 18 an, die um die Achse 13 herum als Schraubenlinienfeder angeordnet und von der Achse gehalten ist.

Der Innenkörper 12 kann mit Vorteil ebenfalls Ausnehmungen wie Löcher 19 aufweisen, schon deswegen, damit eine minimale Kühlluftdurchströmung auch dann erhalten bleibt, wenn der Innenkörper 12 seine oberste Höhenlage mit der stärksten Drosselwirkung der Kühlluftströmung erreichen sollte. Auf diese Weise ist gesichert, dass der Kühlrost, selbst wenn die Schüttgutbetthöhe auf Null reduziert sein sollte, immer gekühlt bleibt. Die Vorspannkraft der wenigstens einen Rückstellfeder 18 ist einstellbar und veränderbar in der Weise, dass das von dem Innenkörper 12 abgewandte Federende sich an einem beispielsweise mit Gewinde versehenen Stellorgan 20 abstützt, durch welches die Federvorspannkraft verstellbar ist. Auf diese Weise kann die Regelkennlinie der erfindungsgemäßen Regelvorrichtung einstellbar und veränderbar sein.

Wird der Innenkörper 12 an seiner Buchse 17 an der Reglergehäuse-Achse 13 auch noch drehbar gelagert und wird der Innenkörper 12 als Flügelrad ausgebildet, das von der Kühlluftströmung 10 angetrieben wird, so kann der Innenkörper 12 zusätzlich zu seiner axialen Verschiebbarkeit noch rotieren, wodurch das Ansprechverhalten des Stellorgans noch erhöht werden kann.

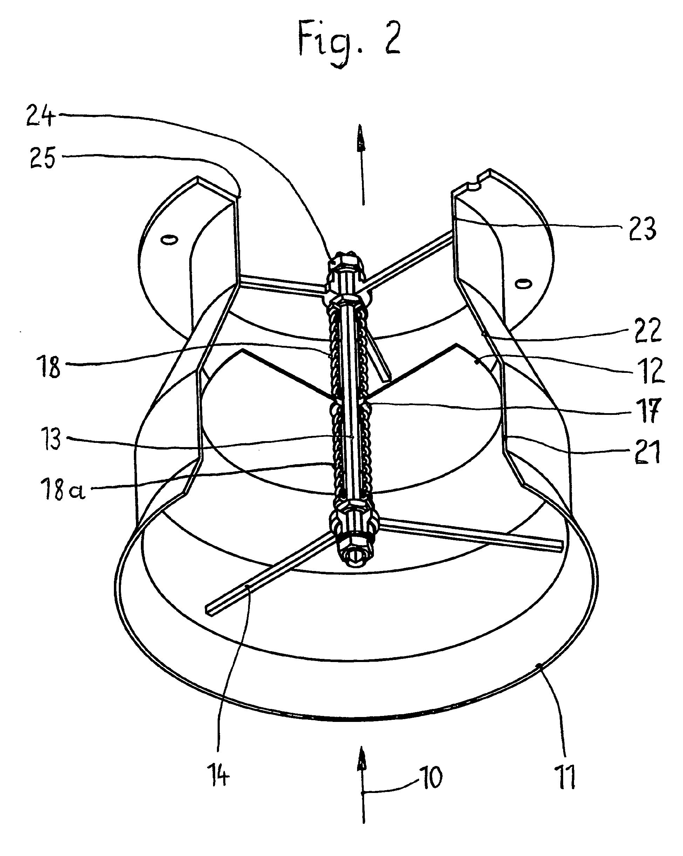

Gemäß dem weiteren Ausführungsbeispiel der Fig. 2 weist das Reglergehäuse 11 drei in Kühlluftströmungsrichtung aufeinanderfolgende und ineinander übergehende Bereiche auf, nämlich einen im Querschnitt zylindrischen Einströmungsbereich 21 und einen sich daran anschließenden kegelstumpfförmig sich in Strömungsrichtung verjüngenden Konusbereich 22, an dessen konisch verkleinerten Querschnitt sich ein zylindrischer Ausströmungsbereich 23 anschließt. Der Innenkörper 12 ist wiederum an einer zentralen Achse 13 geführt, die in diesem Falle unten und oben von Streben 14 im Gehäuse 11 gehalten wird, und er ist in Strömungsrichtung der Kühlluft 10 wiederum selbsttätig bewegbar, wobei eine axiale Verschiebung des Innenkörpers 12 eine Änderung des freien Strömungsquerschnittes zwischen dem Innenkörperrand und dem Gehäusekonus 22 bewirkt in der Weise, dass eine Erhöhung der Strömungsgeschwindigkeit im Bereich des Innenkörpers 12 z. B. anlässlich eines beginnenden Luftdurchbruchs in einem Rostkühlerbereich mit niedriger Schüttgutbetthöhe selbsttätig eine Verkleinerung des freien Strömungsquerschnittes und damit eine Drosselung der Kühlluftdurchflussmenge bewirkt, und umgekehrt. Auch die Regelungsvorrichtung der Fig. 2 kann so ausgebildet sein, dass sie im wesentlichen eine Konstantregelung des Volumenstroms der Kühlluft 10 ermöglicht.

Das Zentrum des Innenkörpers 12 weist nach Fig. 2 wiederum eine Buchse 17 auf, mit der der Innenkörper längs der Achse 13 des Reglergehäuses geführt ist. Am Zentrum des Innenkörpers 12 greift im Bereich ihrer Buchse 17 wenigstens eine Rückstellfeder 18 an, die um die Achse 13 herum als Schraubenlinienfeder angeordnet und von der Achse gehalten ist, und die bei Ausbleiben der Kühlluftströmung 10 den Ringspalt zwischen Innenkörper 12 und Reglergehäusekonus 22 offen hält.

Auch beim Ausführungsbeispiel der Fig. 2 ist die Vorspannkraft der wenigstens einen Rückstellfeder 18 einstellbar und veränderbar in der Weise, dass das vom Innenkörper 12 abgewandte Federende sich z. B. an einer Stellmutter 24 abstützt, die auf das mit Gewinde versehene Ende der Achse 13 zwecks Einstellung/Änderung der Federvorspannkraft verstellbar geschraubt ist. Anstelle oder zusätzlich zur Druckfeder 18 kann auch noch eine Zugfeder 18a vorhanden sein, die mit dem anderen Ende der Achse 13 zusammenwirkt. Durch Änderung der Federvorspannkraft wird auch hier die Regelkennlinie der erfindungsgemäßen Regelvorrichtung eingestellt und ggf. je nach Situation des Kühlerbetriebes verändert.

Analog zum Ausführungsbeispiel der Fig. 1 kann auch bei der Regelungsvorrichtung der Fig. 2 der Innenkörper 12 noch drehbar gelagert sein, und der Innenkörper 12 kann auch noch mit Kühlluft-Durchtrittslöchern versehen sein.

Aus Fig. 3 ist ersichtlich, dass eine Vielzahl der Kühlluft-Regelungsvorrichtungen der Fig. 1 und/oder alternativ Fig. 2 mit jeweils ihren oberen Austrittsöffnungen 25 für die Kühlluftströmung 10 an die Kühllufteintrittsöffnungen an der Unterseite eines insbesondere bewegten Kühlrostes zu dessen Kühlluftversorgung angeflanscht werden kann. Erläutert am Kühlrostmodul der Fig. 3 ist jedes Modul gemäß Ausführungsbeispiel aus drei sich in Kühlerlängsrichtung erstreckenden nebeneinander angeordneten länglichen etwa trogförmigen Bodenelementen 27, 28, 29 zusammengesetzt, die unabhängig voneinander zwischen einer Vorhubposition 30 in Kühlguttransportrichtung und einer Rückhubposition 31 gesteuert bewegbar sind, so dass das auf den Bodenelementen gelagerte dort nicht dargestellte heiße Kühlgut schrittweise z. B. nach dem Walking Floor-Förderprinzip durch den Kühler gefördert wird. Der Antrieb der einzelnen Bodenelemente 27, 28, 29 der Kühlrostmodule erfolgt von unterhalb des Kühlrostes über Schubrahmen, die auf Laufrollen abgestützt sind und an denen Arbeitszylinder angreifen, und zwar gesteuert so, dass die Bodenelemente gemeinsam nach vorn, aber nicht gemeinsam, sondern zeitlich getrennt voneinander zurückbewegt werden.

Die Bodenelemente 27, 28, 29 aller Module sind als Hohlkörper ausgebildet, nämlich sie weisen im Querschnitt gesehen eine das Kühlgut tragende und für die Kühlluft 10 im wesentlichen von unten nach oben durchlässige Oberseite 32 und eine davon beabstandete geschlossene den Kühlgut-Rostdurchfall verhindernde Unterseite 33 auf. Dabei weisen die Unterseiten 33 aller Bodenelemente mehrere über die Länge verteilte Kühllufteintrittsöffnungen auf, an denen von unten die in Fig. 1 bzw. Fig. 2 dargestellten Kühlluftregelungsvorrichtungen angeflanscht sind, von denen in Fig. 3 die drei Reglergehäuse 11 der drei unabhängig voneinander bewegbaren Kühlrost-Bodenelemente 27, 28, 29 zu sehen sind. Die das heiße Kühlgut wie Zementklinker tragenden Kühlrost-Oberseiten 32 können grundsätzlich mit irgendwelchen für die Kühlluft 10 durchlässigen Durchgängen versehen sein. Mit besonderem Vorteil können die Kühlrost-Oberseiten 32 jeweils aus sich mit Abstand spiegelbildlich gegenüberliegenden, aber versetzt zueinander angeordneten satteldachförmigen V-Profilen bestehen, deren V-Schenkel mit Zwischenraum ineinander greifen, welch letzterer ein Labyrinth für das Kühlgut sowie für die Kühlluft 10 bildet. Dadurch ist besonders gewährleistet, dass der Schüttgutkühler gegen Rostdurchfall gesichert ist.

In Fig. 3 ist noch zu sehen, dass auf der für die Kühlluft 10 durchlässigen Oberseite 32 aller Bodenelemente 27 bis 29 quer zur Kühlguttransportrichtung liegende Stege 34a bis 34c zum Festhalten der untersten Schüttgutschicht und zur Vermeidung einer Relativbewegung dieser untersten Schicht und dem jeweiligen Rostbodenelement angeordnet sein können, was zum Verschleißschutz dieser Rostbodenelemente beiträgt.

## Patentansprüche

1. Schüttgutrostkühler, aufweisend eine Regelvorrichtung zur Regelung des Strömungsquerschnittes in den Kühlluftzuströmungen des Schüttgutrostkühlers zur Kühlung eines heißen Schüttgutes mit einem Reglergehäuse (11), das in die Kühlluftzuströmung (10) unterhalb des Kühlrostes des Schüttgutrostkühlers integriert ist, wobei sich im Reglergehäuse (11) ein Stellorgan (12) derart bewegt, dass eine Erhöhung der Strömungsgeschwindigkeit der Kühlluft (10) im Bereich des Stellorgans (12) und damit verbunden ein beginnender Anstieg der Kühlluftdurchflussmenge eine Verkleinerung des freien Strömungsquerschnittes bewirkt und umgekehrt,
**dadurch gekennzeichnet, dass**
das Stellorgan (12) als ein von der Kühlluftströmung (10) translatorisch bewegbarer Innenkörper (12) entgegen der Einwirkung einer Rückstellkraft in dem von zugeführter Kühlluft (10) durchströmten Reglergehäuse (11) verschieblich geführt ist,
wobei
mit zunehmender Höhenlage des von der Kühlluft (10) angeströmten Innenkörpers (12) innerhalb des Reglergehäuses (11) sich der freie für die Kühlluft (10) verbleibende Durchströmungsquerschnitt des Reglergehäuses (11) verkleinert, und umgekehrt.

2. Schüttgutrostkühler nach Anspruch 1,
**dadurch gekennzeichnet, dass**
das Reglergehäuse (11) mindestens eine über die Länge bzw. Höhe und um den Umfang verteilte Öffnung (15) aufweist, wobei die Kühlluft (10) durch diese mindestens eine Öffnung hindurch in das Innere des Reglergehäuses (11) einströmt und an dessen Oberseite (16), die an die Unterseite des Kühlrostes angeflanscht ist, in den Kühlrost ausströmt, und wobei eine axiale Verschiebung des Innenkörpers (12) den Durchströmungsquerschnitt der kühlluftdurchströmten mindestens einen Öffnung (15) verändert.

3. Schüttgutrostkühler nach Anspruch 1,
**dadurch gekennzeichnet, dass**
das Reglergehäuse (11) eine in Strömungsrichtung verlaufende konische Querschnittsverengung aufweist, und dass im Bereich des Gehäuseskonusses (22) der Innenkörper (12) angeordnet ist, wobei eine axiale Verschiebung des Innenkörpers (12) die Änderung des freien Strömungsquerschnittes zwischen dem Innenköperrand und dem Gehäusekonus (22) bewirkt.

4. Schüttgutrostkühler nach einem der Ansprüche 1 bis 3,
**dadurch gekennzeichnet, dass**
der Querschnitt des Reglergehäuses (11) und der Umfang des Innenkörpers (12) rund oder vieleckig sind.

5. Schüttgutrostkühler nach Anspruch 1,
**dadurch gekennzeichnet, dass**
durch Änderung der Vorspannkraft wenigstens einer Rückstellfeder (18) die Regelkennlinie der Regelvorrichtung einstellbar und veränderbar ist.

6. Schüttgutrostkühler nach Anspruch 5,
**dadurch gekennzeichnet, dass**
die Rückstellfeder (18) eine um die Reglergehäuse-Achse (13) herum angeordnete Schraubenlinienfeder ist, deren vom Innenkörper (12) abgewandtes Ende sich an einem Stellorgan (20, 24) abstützt, das auf das mit Gewinde versehene Ende der Achse (13) zur Einstellung der Federvorspannkraft verstellbar geschraubt ist.

7. Schüttgutrostkühler nach einem der vorhergehenden Ansprüche,
**dadurch gekennzeichnet, dass**
der Innenkörper (12) an seiner Buchse (17) an der Reglergehäuse-Achse (13) drehbar gelagert ist und zur Erzielung einer Rotation des Innenkörpers angetrieben von der durch das Reglergehäuse (11) geführten Kühlluftströmung (10) als Flügelrad ausgebildet ist.

8. Schüttgutrostkühler nach einem der Ansprüche 1 bis 7,
**dadurch gekennzeichnet, dass**
die Kühlluft-Angriffsfläche des Innenkörpers (12) Ausnehmungen (19) wie Perforationen aufweist, so dass eine minimale Kühlluftdurchströmung (10) auch dann erhalten bleibt, wenn der Innenkörper (12) seine oberste Höhenlage erreicht.

9. Schüttgutrostkühler nach einem oder mehreren der Ansprüche 1 bis 8,
**dadurch gekennzeichnet, dass**
die unterhalb des Kühlrostes eines Schüttgutkühlers angeordneten Kühlluftmengen-Regelungsvorrichtungen (11) sowohl an feststehenden als auch an bewegten Zonen des Kühlrostes (27 bis 29) angeordnet sind.

## Claims

1. Bulk material grate cooler, having a regulating device for regulating the flow cross section in the cooling air inflows of the bulk material grate cooler for cooling hot bulk material, with a regulator housing (11) which is integrated into the cooling air inflow (10) below the cooling grate of the bulk material grate cooler, a control element (12) being moved in such a way in the regulator housing (11) that an increase in the flow rate of the cooling air (10) in the region of the control element (12) and, associated therewith, an incipient increase in the cooling air flow quantity bring about a reduction in the free flow cross section, and vice versa, **characterized in that**
the control element (12), as an inner body (12) which can be moved translatorily by the cooling air flow (10), is guided displaceably counter to the action of a restoring force in the regulator housing (11) through which cooling air (10) supplied flows,
with increasing height inside the regulator housing (11) of the inner body (12) against which the cooling air (10) flows, the free flow cross section of the regulator housing remaining for the cooling air (10) being reduced, and vice versa.

2. Bulk material grate cooler according to Claim 1, **characterized in that** the regulator housing (11) has at least one opening (15) distributed over the length or height and around the periphery, the cooling air (10) flowing into the interior of the regulator housing (11) through this at least one opening and flowing out into the cooling grate on the upper side (16) of the housing, which is flanged onto the lower side of the cooling grate, and axial displacement of the inner body (12) varying the flow cross section of the at least one opening (15) flowed through by cooling air.

3. Bulk material grate cooler according to Claim 1, **characterized in that** the regulator housing (11) has a conical cross-sectional narrowing extending in the flow direction, and **in that** the inner body (12) is arranged in the region of the housing cone (22), axial displacement of the inner body (12) causing the free flow cross section between the inner body edge and the housing cone (22) to change.

4. Bulk material grate cooler according to one of Claims 1 to 3, **characterized in that** the cross section of the regulator housing (11) and the periphery of the inner body (12) are round or polygonal.

5. Bulk material grate cooler according to Claim 1, **characterized in that** the regulating characteristic of the regulating device is settable and variable by means of changing the preloading force of at least one restoring spring (18).

6. Bulk material grate cooler according to Claim 5, **characterized in that** the restoring spring (18) is a helical spring which is arranged around the regulator housing spindle (13) and the end of which facing away from the inner body (12) is supported on a control element (20, 24) which is screwed adjustably onto the threaded end of the spindle (13) for setting the spring preloading force.

7. Bulk material grate cooler according to one of the preceding claims, **characterized in that** the inner body (12) is mounted rotatably at its bush (17) on the regulator housing spindle (13) and is designed as a vane wheel for bringing about rotation of the inner body driven by the cooling air flow (10) guided through the regulator housing (11).

8. Bulk material grate cooler according to one of Claims 1 to 7, **characterized in that that** surface of the inner body (12) acted on by the cooling air has cutouts (19) such as perforations so that a minimum cooling air flow (10) is also maintained when the inner body (12) reaches its highest position.

9. Bulk material grate cooler according to one or more of Claims 1 to 8, **characterized in that** the cooling air quantity regulating devices (11) arranged below the cooling grate of a bulk material cooler are arranged both on stationary and on moving zones of the cooling grate (27 to 29).

## Revendications

1. Refroidisseur à grille de matières en vrac, comprenant un dispositif de régulation pour la régulation de la section d'écoulement dans les afflux d'air de refroidissement du refroidisseur à grille de matières en vrac pour le refroidissement d'une matière en vrac chaude, avec un boîtier de régulateur (11) qui est intégré dans l'afflux d'air de refroidissement (10) en dessous de la grille de refroidissement du refroidisseur à grille de matières en vrac, dans lequel un organe de réglage (12) se déplace dans le boîtier de régulateur (11), de telle manière qu'un accroissement de la vitesse d'écoulement de l'air de refroidissement (10) dans la région de l'organe de réglage (12) et, lié à celui-ci, un début d'augmentation du débit d'air de refroidissement provoquent une diminution de la section d'écoulement libre et inversement, **caractérisé en ce que** l'organe de réglage (12) est guidé de façon mobile dans le boîtier de régulateur (11) traversé par l'air de refroidissement fourni (10), sous la forme d'un corps intérieur (12) déplaçable en translation par l'écoulement d'air de refroidissement (10) contre l'action d'une force de rappel, dans lequel la section d'écoulement libre du boîtier de régulateur (11) restant pour l'air de refroidissement (10) diminue lorsque la position en hauteur du corps intérieur (12) abordé par l'air de refroidissement (10) à l'intérieur du boîtier de régulateur (11) augmente, et inversement.

2. Refroidisseur à grille de matières en vrac selon la revendication 1, **caractérisé en ce que** le boîtier de régulateur (11) présente au moins une ouverture (15) répartie sur la longueur ou la hauteur et sur la périphérie, dans lequel l'air de refroidissement (10) pénètre à l'intérieur du boîtier de régulateur (11) à travers cette au moins une ouverture et en sort vers la grille de refroidissement par son côté supérieur (16), qui est fixé par une bride au côté inférieur de la grille de refroidissement, et dans lequel un déplacement axial du corps intérieur (12) change la section d'écoulement de l'au moins une ouverture (15) traversée par l'air de refroidissement.

3. Refroidisseur à grille de matières en vrac selon la revendication 1, **caractérisé en ce que** le boîtier de régulateur (11) présente une diminution de section conique dans le sens de l'écoulement, et **en ce que** le corps intérieur (12) est disposé dans la région du cône de boîtier (22), dans lequel un déplacement axial du corps intérieur (12) entraîne la variation de la section d'écoulement libre entre le bord du corps intérieur et le cône de boîtier (22).

4. Refroidisseur à grille de matières en vrac selon l'une quelconque des revendications 1 à 3, **caractérisé en ce que** la section du boîtier de régulateur (11) et la périphérie du corps intérieur (12) sont rondes ou polygonales.

5. Refroidisseur à grille de matières en vrac selon la revendication 1, **caractérisé en ce que** la caractéristique de régulation du dispositif de régulation peut être réglée ou modifiée par une variation de la force de précontrainte d'au moins un ressort de rappel (18).

6. Refroidisseur à grille de matières en vrac selon la revendication 5, **caractérisé en ce que** le ressort de rappel (18) est un ressort hélicoïdal disposé autour de l'axe (13) du boîtier de régulateur, dont l'extrémité éloignée du corps intérieur (12) prend appui sur un organe de réglage (20, 24) qui est vissé de façon réglable sur l'extrémité de l'axe (13) pourvue d'un filet pour le réglage de la force de précontrainte du ressort.

7. Refroidisseur à grille de matières en vrac selon l'une quelconque des revendications précédentes, **caractérisé en ce que** le corps intérieur (12) est monté de façon rotative par son coussinet (17) sur l'axe (13) du boîtier de régulateur et est réalisé en forme de roue à palettes entraînée par l'écoulement d'air de refroidissement (10) guidé à travers le boîtier de régulateur (11) pour la production d'une rotation du corps intérieur.

8. Refroidisseur à grille de matières en vrac selon l'une quelconque des revendications 1 à 7,
**caractérisé en ce que** la face d'impact de l'air de refroidissement du corps intérieur (12) présente des évidements (19), tels que des perforations, de telle manière qu'un écoulement minimal d'air de refroidissement (10) soit obtenu même lorsque le corps intérieur (12) atteint sa position la plus élevée en hauteur.

9. Refroidisseur à grille de matières en vrac selon l'une quelconque des revendications 1 à 8,
**caractérisé en ce que** les dispositifs de régulation du débit d'air de refroidissement (11) disposés en dessous de la grille de refroidissement d'un refroidisseur à grille de matières en vrac sont disposés aussi bien sur des zones stationnaires que sur des zones mobiles de la grille de refroidissement (27 à 29).
